Europäisches Patentamt

European Patent Office

Office européen des brevets

(11) Veröffentlichungsnummer: **0 063 305**

**A1**

(12) # EUROPÄISCHE PATENTANMELDUNG

(21) Anmeldenummer: **82102904.8**

(22) Anmeldetag: **05.04.82**

(51) Int. Cl.$^3$: **F 01 L 3/06**
   **F 01 L 13/00**

(30) Priorität: **10.04.81 DE 3114622**

(43) Veröffentlichungstag der Anmeldung:
   **27.10.82 Patentblatt 82/43**

(84) Benannte Vertragsstaaten:
   **AT DE FR GB IT SE**

(71) Anmelder: **BAYERISCHE MOTOREN WERKE
   Aktiengesellschaft
   Postfach 40 02 40 Petuelring 130
   D-8000 München 40(DE)**

(72) Erfinder: **Seidl, Jiri, Dipl.-Ing.
   Strassberger Strasse 14
   D-8000 München 40(DE)**

(74) Vertreter: **Schweiger, Erwin
   Bayerische Motoren Werke Aktiengesellschaft Postfach
   40 02 40 - AJ-20
   D-8000 München 40(DE)**

(54) **Gemischverdichtende, fremdgezündete Brennkraftmaschine mit einem hubverstellbaren Einlassventil.**

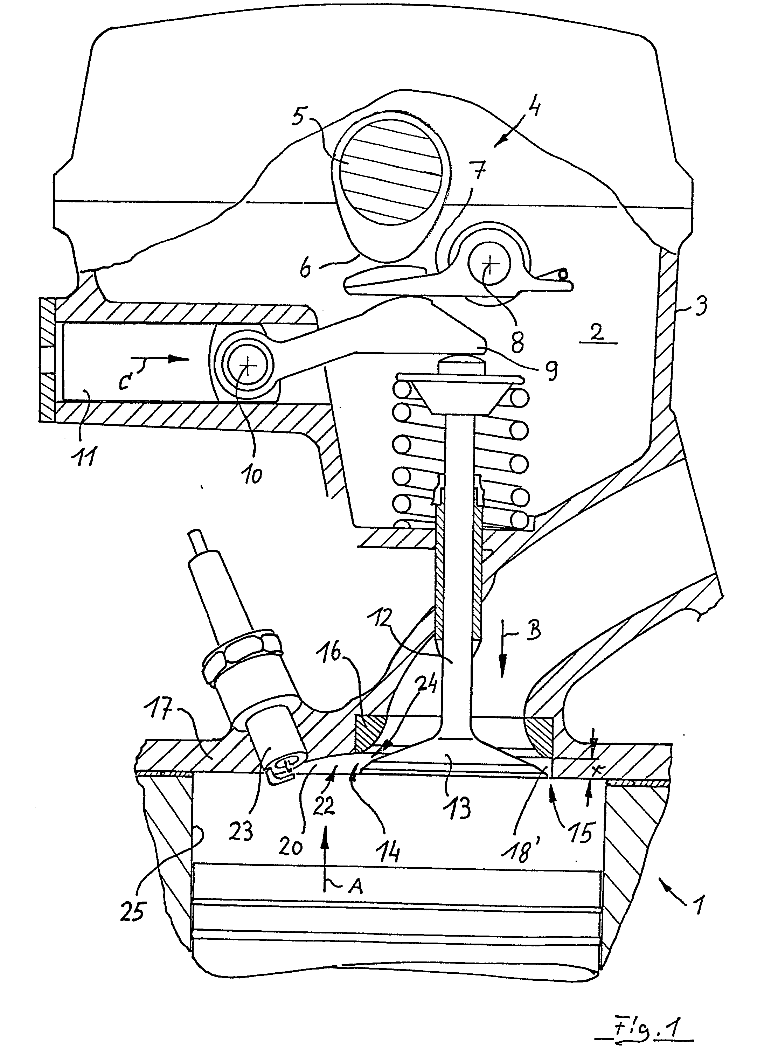

(57) Bei einer gemischverdichtenden, fremdgezündeten Brennkraftmaschine (1) mit hubverstellbarem Ventiltrieb (4) ist dieser mit einem abgeschirmten Einlaßventil (12) kombiniert, wobei bei geringerer Maschinenbelastung der Ventilteller (13) des Einlaßventiles (12) über einen Umfangsabschnitt sowie in Hubrichtung über einen Teil des maximalen Hubes bei auf die Höhe "x" einer Abschirmung (15) begrenztem Hub des Einlaßventiles (12) derart abgeschirmt ist, daß der Ventilspalt (24) in einem Bereich (14) seines Umfanges zu einer Zündkerze (23) im Zylinderkopfboden (17) oder in tangentialer Richtung zu einer Zylinderbohrung (25) hin geöffnet ist (Fig. 1).

Fig. 1

EP 0 063 305 A1

- 1 -

## Gemischverdichtende, fremdgezündete Brennkraftmaschine mit einem hubverstellbaren Einlaßventil

Die Erfindung geht gemäß dem Oberbegriff des Hauptanspruches von der deutschen Patentanmeldung P 29 51 361.9 aus.

Bei dieser bekannten Bauart ist durch den geringeren Ventilspalt im Leerlauf- und Teillastbetrieb der Brennkraftmaschine bei insgesamt geringer Gemischmenge im Zylinder keine den Verbrennungsablauf günstig beeinflussende Strömung des Gemisches erzielt. Besonders nachteilig für einen runden Lauf der Brennkraftmaschine wirkt sich dabei eine ungenügende Umspülung der Zündkerze mit Gemisch aus. Um einen dadurch verzögerten Beginn der Verbrennung zu vermeiden, ist ein relativ fettes Gemisch notwendig, wodurch ein erhöhter Kraftstoffverbrauch entsteht.

Der Erfindung liegt die Aufgabe zugrunde, durch eine Hauptströmrichtung des Gemisches zur Zündkerze im Leerlauf- und Teillastbetrieb der Brennkraftmaschine ein insgesamt relativ mageres Gemisch zu ermöglichen.

Diese Aufgabe ist durch die im Kennzeichen des Hauptanspruches angegebenen Mittel gelöst.

Zwar ist aus der DE-PS 587 675 eine Diesel-Brennkraftmaschine mit abgeschirmtem Einlaßventil bekannt, wobei die
Höhe der über einen Teil des Ventiltellerumfanges sich
erstreckenden Abschirmung der Größe des Ventilhubes so angepaßt ist, daß das Einlaßventil während eines Teiles des
Einlaßtaktes nach einer Richtung abgeschirmt ist. Jedoch
ist durch diese nur bei Hubbeginn wirksame Abschirmung des
im Hub unverstellbaren Einlaßventiles bei einer stets
füllungsgesteuerten Otto-Brennkraftmaschine durch die geringen Gemischmengen im Leerlauf- und Teillastbetrieb
keine gezielte Umspülung der Zündkerze erreichbar.

Dies erreicht jedoch in vorteilhafter Weise die erfinderische Kombination der für sich bekannten Merkmale eines
hubverstellbaren Ventiltriebes und eines abgeschirmten
Einlaßventiles mit einem auf die Höhe der Abschirmung reduzierbaren Ventilhub.

Durch die Erfindung ist bei einem auf die Höhe der Abschirmung reduzierten Hub des Einlaßventiles der Ventilspalt in Umfangsrichtung zu einem erheblichen Teil derart
abgedeckt, daß das Gemisch über den der Zündkerze zugewandten Bereich in vorteilhafter Weise als ein einziger
Strahl auf die Zündkerze in den Zylinder eingeführt und
dadurch bei einem weniger fetten Gemisch eine einwandfreie
und rechtzeitig einsetzende Verbrennung erzielt wird.

Eine frühzeitige Auffächerung des Strahles vor Erreichen
der Zündkerze ist in weiterer Ausgestaltung der Erfindung
nach Anspruch 2 mit einem an die Abschirmung sich anschließenden Leitkanal vermieden. Dabei kann die Zündkerze
im Leitkanal so angeordnet werden, daß sie in dem Strahl
in einer Zone leicht entflammbaren Gemisches mit geringem
Anteil an größeren Kraftstofftröpfchen liegt. Erreicht ist
damit ein runder Lauf der Brennkraftmaschine bei geringerem Kraftstoffbedarf.

Mit der im Anspruch 3 angegebenen Höhe der Abschirmung ist ein Verlust an Füllung und damit Leistung im Vollastbereich bei vollem Ventilhub weitestgehend vermieden.

Die Erfindung ist anhand eines in der Zeichnung dargestellten Ausführungsbeispiels beschrieben.

Die Zeichnung zeigt in

Fig. 1     ein hubverstellbares, abgeschirmtes Einlaßventil für gemischverdichtende, fremdgezündete Brennkraftmaschinen,

Fig. 2     eine Ansicht auf den Zylinderkopfboden gemäß Pfeil "A" in Fig. 1.

Eine nicht näher dargestellte gemischverdichtende, fremdgezündete Brennkraftmaschine 1 ist in einem Steuerraum 2 eines abschnittsweise aufgezeigten Zylinderkopfes 3 mit einem hubverstellbaren Ventiltrieb 4 ausgerüstet. Der Ventiltrieb 4 umfaßt eine Nockenwelle 5 mit einem Nocken 6, der auf einem ersten Betätigungshebel 7 einwirkt. Der Betätigungshebel 7 ist um eine gehäusefeste Achse 8 schwenkbar gelagert und wirkt seinerseits auf einen zweiten Betätigungshebel 9 ein, der zusammen mit seiner Drehachse 10 in der Schwenkebene über ein geführtes Element 11 zur Hubverstellung eines Einlaßventiles 12 verschiebbar ist. Weiter ist ein Auslaßventil 12' vorgesehen.

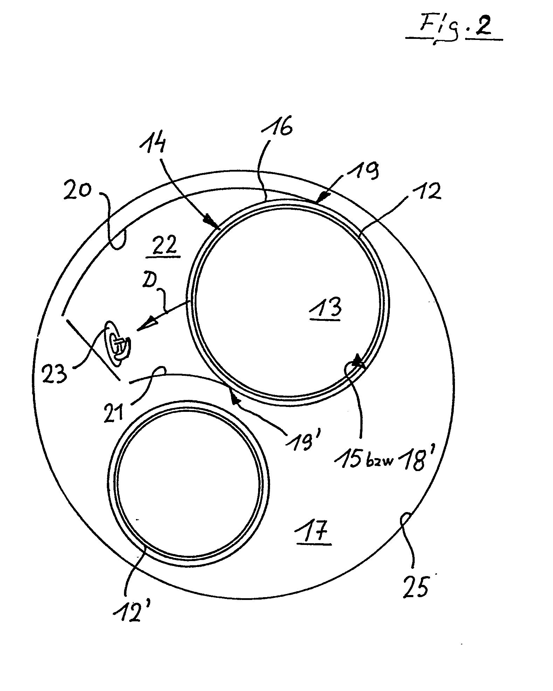

Der Ventilteller 13 des Einlaßventiles 12 ist nach Fig. 2 in Umfangsrichtung bis auf einen Bereich 14 und in Hubrichtung gemäß Pfeil "B" in Fig. 1 über einen Teil des maximal möglichen Hubes abgeschirmt. Der Hub des Einlaßventiles 12 ist auf die Höhe "x" der Abschirmung 15 durch Verschieben des Betätigungshebels 9 über das Führungselement 11 gemäß Pfeil "C" einstellbar, wobei das Führungselement 11 von einer nicht gezeigten Steuervorrichtung angetrieben wird.

Das Einlaßventil 12 wirkt mit einem Ventilsitzring 16
zusammen. Der Ventilsitzring 16 ist in einer zum Einlaßventil 12 koaxial im Zylinderkopfboden 17 angeordneten
Ausdrehung 18 vertieft angeordnet. Die Abschirmung 15 ist
über einen Teil des Umfanges des Ventilsitzringes 16 vom
freiliegenden Abschnitt der Begrenzung 18' der Ausdrehung
18 gebildet. Weiter ist die Abschirmung 15 in geringem Abstand zum Umfang des Ventiltellers 13 angeordnet.

Die Abschirmung 15 bzw. der Abschnitt der Begrenzung 18'
der Ausdrehung 18 geht bei 19 und 19' in Seitenwände 20
und 21 eines im Zylinderkopfboden 17 ausgebildeten Leitkanals 22 über. Im Leitkanal 22 ist eine Zündkerze 23 in
einem Abstand zum Ventil 12 angeordnet. Bei Leerlauf- und
Teillastbetrieb der Otto-Brennkraftmaschine 1 ist der Hub
des Einlaßventiles 12 auf die Höhe "x" der Abschirmung 15
reduziert, wobei die Abschirmung 15 den Ventilspalt 24 bis
auf den der Zündkerze 23 zugewandten Bereich 14 abschirmt.
Erzielt ist damit ein auf die Zündkerze 23 gerichteter Gemischstrahl gemäß Pfeil "D" in Fig. 2, wobei durch den
Leitkanal 22 eine Auffächerung des Gemischstrahles vermieden ist. Somit ist für das Gemisch eine Hauptströmrichtung
zur Zündkerze 23 erreicht.

Die Füllung bleibt im oberen Teillast- sowie im Vollastbetrieb praktisch unbeeinflußt, wenn die Abschirmung 15 in
ihrer Höhe "x" etwa einem Zehntel des bei Vollast wirksamen maximalen Hubes des Einlaßventiles 12 entspricht. Andererseits wird bei dieser Bemessung der Abschirmung und
des reduzierten Ventilhubes eine besonders intensive
Durchmischung und damit eine gute Homogenität des Gemisches erreicht, wodurch dieses relativ mager eingestellt werden kann. Das magere Gemisch kann durch seine Hauptströmrichtung zur Zündkerze 23 sicher und rechtzeitig gezündet werden.

- 1 -

Patentansprüche:

1. Gemischverdichtende, fremdgezündete Brennkraftmaschine
   mit einem hubverstellbaren Einlaßventil,
   dadurch gekennzeichnet,
   - daß der Hub auf die Höhe (x) einer Abschirmung (15)
     des Einlaßventiles (12) reduzierbar ist,
   - wobei die Abschirmung eine gegenüber dem
     maximalenHub geringe Höhe aufweist
   - und den Ventilspalt (24) bis auf einen, der Zündkerze
     (23) zugewandten Bereich (14) abschirmt.

2. Brennkraftmaschine nach Anspruch 1, dadurch gekennzeichnet,
   - daß die Abschirmung (15) durch einen Abschnitt der
     Begrenzung (18') einer zum Einlaßventil (12) konzentrischen Ausdrehung (18) im Zylinderkopfboden (17)
     gebildet ist,
   - wobei die Begrenzung (18') der Ausdrehung (18) in dem
     der Zündkerze (23) zugewandten Bereich (14) des Ventilspaltes (24) in tangential anschließende Seitenwände (20, 21) eines im Zylinderkopfboden (17) ausgebildeten Leitkanals (22) übergeht.

3. Brennkraftmaschine nach Anspruch 2, dadurch gekennzeichnet,
   - daß die Abschirmung (15) in ihrer Höhe (x) etwa einem
     Zehntel des maximalen Hubes entspricht
   - und der Hub des Einlaßventiles (12) bei Leerlauf-
     und/oder Teillastbetrieb der Maschine (1) auf diese
     Höhe (x) begrenzt ist.

Fig.1

0063305

*Fig.2*

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-3 422 803 (GENERAL MOTORS) * Spalte 1, Zeile 28 - Spalte 2, Zeile 9; Spalte 4, Zeilen 30-44; Spalte 5, Zeilen 50-75; Spalte 6, Zeilen 59-72; Spalte 7, Zeilen 32-41; Figuren 1,2 * & DE - A - 1 751 449 | 1 | F 01 L 3/06 F 01 L 13/00 |
| | --- | | |
| A | US-A-3 911 873 (DAVE) * Spalte 8, Zeilen 12-19, 30-49; Figuren 10,14,15 * | 1 | |
| | --- | | |
| A | GB-A- 307 996 (BAILEY) * Seite 1, Zeile 55 - Seite 2, Zeile 12; Seite 3, Zeile 81 - Seite 4 , Zeile 32; Figuren 1,2 * | 1 | |
| | --- | | |
| D,A | DE-C- 587 675 (PENTAVERKEN) * Seite 1, Zeilen 1-6; Seite 2, Zeilen 40-59; Figuren 1-3 * | 1,2 | RECHERCHIERTE SACHGEBIETE (Int. Cl. 3) |
| | --- | | |
| A | DE-A-2 551 901 (BMW) * Seite 1, Anspruch * | 1 | F 01 L F 02 D F 02 B |
| | --- | | |
| D,A | DE-A-2 951 361 (BMW) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 19-07-1982 | KOOIJMAN F.G.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82